# EUROPEAN PATENT APPLICATION

(11) **EP 3 244 062 A1**
(43) Date of publication of application: **15.11.2017**
(21) Application number: 16168924.5
(22) Date of filing: 10.05.2016
(51) Int. Cl.: F03G 7/06

(54) **THERMALLY ACTIVATED ACTUATOR AND METHOD FOR MANUFACTURING A THERMALLY ACTIVATED ACTUATOR**

(71) Applicant: Technische Hochschule Nuernberg Georg-Simon-Ohm, 90489 Nuernberg (DE)
(72) Inventor: Dengler, Philipp, 90489 Nürnberg (DE); Lippenberger, Michael, 91099 Poxdorf (DE); Dwars, Anja, 90455 Nürnberg (DE)
(74) Representative: Isarpatent

(57) **Abstract**

A thermally activated actuator (10), particularly an actuator based on liquid crystalline elastomers (LCEs), includes an actuator housing (1), a thermal interface fluid (3) contained in the actuator housing (1), and a strip of actuator sheet material (4) rolled up to a coil which is embedded in the thermal interface fluid (3) within the actuator housing (1). The actuator (10) is thermally activated by introducing thermal excitation energy into the thermal interface fluid (3) and by transferring the thermal excitation energy via the thermal interface fluid (3) to the rolled up actuator sheet material (4) to cause the actuator sheet material (4) to expand in radial direction and thus to contract in axial direction.

## Description

### FIELD OF THE INVENTION

The present invention pertains to a thermally activated actuator and a method for manufacturing such a thermally activated actuator, in particular actuators based on liquid crystalline elastomers (LCE) as actuated material.

Although applicable for any kind of actuator structure, the present invention and the corresponding underlying problems will be explained in further detail in conjunction with tubular roll actuators.

### BACKGROUND OF THE INVENTION

An emergent class of materials which allow for reversible expansion, rotation and/or contraction when exposed to an external stimulus such as pressure change, temperature change, change in applied electric potential, change in ambient pH value or change in ambient ion concentration lends itself to the construction of a particular type of motor that extracts energy of one type presented by the external stimulus into mechanical motion. Such motors, usually generally referred to as actuators, tend to be light-weight, compact and highly scalable mechanical components with high power density, good durability under strain, high force-to-weight ratio, rapid force response times and excellent reproducibility of force conversion.

Materials of interest include dielectric electroactive polymers (EAP) which - when excited externally via application of an electric voltage - convert electrostatic forces between its molecules to mechanical expansion or compression. Examples for such EAPs include for example dielectric elastomers (DEs) and electrostrictive polymers. Document WO 2004/027970 A1 discloses actuators that are working on the basis of rolled-up elastomer sheets a deformation of which may be achieved by applying an electric potential difference between electrode terminals formed on different ends of the rolled-up elastomer sheets.

Another class of materials that may be used for manufacturing mechanical actuators are liquid crystalline elastomers (LCE). LCEs may be formed by using silicon or carbon elastomeric backbones arranged in long polymer chains which may be crosslinked using crosslinking molecules. By introducing rod-like molecules into the crosslinked backbone chain a mesophase structure may be implemented that causes the polymer chains themselves to adopt a conformation compatible with the structure of the mesophase. Those rod-like molecules are thus often referred to as "mesogens" or "mesogenic groups". Most importantly, the mesogens are a compound which exhibit properties of liquid crystals, i.e. the mesogens inherently induce anisotropy in the LCE which may be resolved to amorphic behaviour upon thermally activating the mesogenic compound.

While the silicon or carbon elastomeric backbones dominate the macroscopic behaviour of the LCE, the mesogenic groups convey thermotropism to the LCE. Those hybrid properties may be utilized when manufacturing an actuator on the basis of LCE material: The elastomeric backbone material soaked with the desired mesogen concentration may be carefully mechanically stretched before polymerisation. This causes the mesogens to increase their level of anisotropy, i.e. the rod-like molecules are mainly oriented in the direction of stretching stress. Upon polymerisation, the whole LCE is biased in a preferred direction. Mesogenic groups may be bound to the backbone in different ways, for example as part of the elastomeric chain (so-called "main chain LCEs") or as pendants attached by spacers to the chains (so-called "side chain LCEs").

In either case, if the LCE is brought above a certain phase change temperature which may depend on both the choice of material and concentration of backbone and mesogens, the mesogens change from the liquid crystalline state to an isotropic liquid state in which the orientational entropy of the mesogens is maximized again. This causes the LCE to macroscopically contract in the inherently defined preferred direction of the actuator. The whole process is thermally reversible, i.e. upon lowering the temperature of the LCE to below the phase change temperature (taking into account hysteretic effects) the mesogens again form the liquid crystalline state causing the LCE material to expand back to the biased macroscopic state. The governing principles of the operation of LCEs are for example shown in further detail in the document DE 272 25 89 C2. Application examples of LCEs in conjunction with actuators are disclosed in document Jiang, Hongrui, Chensha Li, and Xuezhen Huang: "Actuators Based on Liquid Crystalline Elastomer Materials", Nanoscale 5.12 (2013), pp. 5225-5240, PMC.

One of the challenges in utilizing LCE materials for assembling actuators is to optimize the effectively usable force in relation to the stress that the material is able to block: The force that can be produced by an LCE actuator scales approximately linearly with the cross-sectional area of the material in a cross-sectional plane perpendicular to the preferred direction of the LCE material. The straight forward solution - simply increasing this cross-sectional area - is quite often hampered by the boundary conditions of the manufacturing process for LCE material which is usually produced in sheets of about 0.2 mm to 0.3 mm thickness.

The document US 7,936,404 B2, for example, suggests forming an actuator by stacking sheets of LCE material and providing heating filaments and thermally conductive paste between the sheets. The document DE 10 2011121 741 A1 suggests forming an actuator from a tubular flexible housing upon which an electroactive polymer material is wound in a spiral.

There is, however, a need for actuators with enhanced available contraction forces which are easier to manufacture and more reliable over a great number of contraction cycles.

### SUMMARY OF THE INVENTION

It is one of the objects of the invention to provide for an encapsulated actuator on the basis of thermally activated materials that shows enhanced scalability, fast responsiveness to thermal activation and precisely controllable actuation.

According to a first aspect of the invention, a thermally activated actuator, particularly an actuator based on liquid crystalline elastomers, includes an actuator housing, a thermal interface fluid contained in the actuator housing, and a strip of actuator sheet material rolled up to a coil which is embedded in the thermal interface fluid within the actuator housing. The actuator is thermally activated by introducing thermal excitation energy into the thermal interface fluid and by transferring the thermal excitation energy via the thermal interface fluid to the rolled up actuator sheet material to cause the actuator sheet material to expand in radial direction and thus to contract in axial direction.

According to a second aspect of the invention, a method for manufacturing a thermally activated actuator comprises rolling up a strip of actuator sheet material to a coil, encapsulating the rolled up actuator sheet material in an actuator housing, and filling the actuator housing including the encapsulated actuator sheet material with a thermal interface fluid. The method is used to create an actuator which may be thermally activated by introducing thermal excitation energy into the thermal interface fluid and by transferring the thermal excitation energy via the thermal interface fluid to the rolled up actuator sheet material to cause the actuator sheet material to expand in radial direction and thus to contract in axial direction.

One idea of the present invention is to overcome the problems associated with the low thickness of the actuator sheet material and the concomitant limited forces that may be produced with such sheet material. Approaches with stacked sheet material may suffer from problems with rigidity.

A great advantage associated with using liquid crystalline elastomers (LCE) as basis for the actuator sheet material is the high degree of versatility that comes along with the selection of both the polymer network and the mesogens to use as well as with the low number of essential materials needed in fabrication of the sheet materials.

By using an actuator housing enclosing both the active material as well as the heat transfer medium, the whole system may be encapsulated and protected against external influences of all sort. The housing serves as strain relief for the actuator material as well. Particularly appealing is the possibility to provide for a high degree of biocompatibility of the actuator, rendering such actuators very useful for applications in medical implantology and other medical instruments, apparatus or appliances used for diagnostic and/or therapeutic purposes.

A further advantage may be seen in the great scalability: Due to the low rigidity constraints associated with winding up the sheet material in regular shapes, such as Archimedean spirals, the number of windings and thus the increase in effectively usable contraction area scales nearly proportionally with the length of strip material used. The coil architecture ensures similar distances between neighbouring sheet material sections, so that the heat transfer via the thermal interface fluid is approximately the same and homogeneous over the whole width of the rolled-up strip of sheet material. This guarantees a rapid activation response due to the fast, uniform and steady transfer of heat between fluid and actuator sheet. At the same time, the overall length of the actuator may determine the stroke length of the actuator which may be up to 40% of the actuator length.

By using electric current as means for transferring heat from outside the actuator to the thermal interface fluid, the actuator may be precisely controlled with digital or analogue electric control circuitry.

According to some embodiments of the actuator, the actuator sheet material may comprise a liquid crystalline elastomer (LCE). For example, in some embodiments the LCE may comprise silicone or carbon backbone polymer chain cross-linked with mesogens or mesagenic groups. LCEs advantageously provide for a combination of the self-aligning properties of the liquid crystals with the good elastic properties of the polymer backbone. Thus, full reversibility of the actuation and low amounts of excitation energy needed for the actuation may be realized. A simple, cost efficient way to prepare LCEs with high throughput is to fabricate the LCE as a film of about 0.2 mm to 0.3 mm in thickness. Those LCE films exhibit a strong anisotropy in the crystalline state of the mesogens and may advantageously provide up to 40% contraction along the preferred anisotropic direction.

According to some further embodiments of the actuator, the thermal interface fluid may comprise one of an electrolytic solution, an organic fluid and a thermally conductive gel. Additionally, the thermal interface fluid may have an electric conductivity value above a predetermined conductivity threshold. Thermal interface fluids that may advantageously be used include electrically conductive soot or carbon black composites, graphene flakes, carbon nanotubes or other metallic particles that may be compounded with a fluid or gel carrier substance. While the carrier substance may largely be tailored towards a high thermal conductivity and a low heat capacity value, the electrically conductive compound portion may provide for the good electric conductivity.

Such thermal interface fluids advantageously enable a rapid heat transfer to and from the rolled up actuator sheet material. Due to the ability to flow in between the coil windings and to intimately come into contact with a large surface area of the rolled up actuator sheet material, the heat transfer is homogeneous, predictable and fast. The good electric conductivity enables the thermal energy to be introduced by means of electric current being forced through the thermal interface fluid leading to resistive heating of the thermal interface fluid.

To that extent, some embodiments of the actuator further comprise two electrically conductive end caps attached to opposite ends of the actuator housing. Those end caps advantageously encapsulate the thermal interface fluid and the actuator sheet material within the actuator housing. The advantages associated with such end caps are threefold: First of all, the end caps provide for mechanical stabilization of the actuator housing and tightly seal the housing against the surrounding so that the thermal interface fluid will stay inside the housing. Secondly, the end caps act as mechanical force transmitters via which the contraction forces exerted by the radially expanding rolled up actuator sheet material may be transferred to components attached to the end caps. Finally, the end caps being fabricated from an electrically conductive material provides for a convenient and controllable manner to transfer heat to the actuator by means of electric current.

According to some further embodiments of the actuator, the actuator housing may have an outer shape of a tubular cylinder. In some of those embodiments, the actuator housing may comprise one or more of silicone, rubber, polyurethane, polyamide and polyethylene, which may in some embodiments be formed as an elastic film. The housing being made from an elastic film advantageously provides for little restraint of the radial expansion of the actuator sheet material. In other words, the actuator sheet coil does only need a small fraction of the expansion forces to widen the tubular housing, thus maximizing the usable contraction capability of the actuator. Moreover, soft materials like silicone, rubber, polyurethane, polyamide and polyethylene provide for excellent interoperability in applications where rigid actuators are unfavourable such as soft robotics, medical engineering, artificial muscles and microfluidics.

According to some embodiments of the method, the actuator sheet material may comprise a liquid crystalline elastomer (LCE), such as for example silicone or carbon backbone polymer chain cross-linked with mesogens or mesogenic groups. In some embodiments such LCE material may be used in the pre-fabrication of the rolled up actuator sheet material by polymerizing the rolled up sheet material in a stretched state to create an expansion bias in a preferred contraction direction.

According to some further embodiments of the method, the method may further comprise capping off the ends of the actuator housing with electrically conductive end caps. According to some further embodiments of the method, the thermal interface fluid may comprise one of an electrolytic solution, an organic fluid and a thermally conductive gel.

### BRIEF DESCRIPTION OF THE DRAWINGS

The invention will be explained in greater detail with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. Like reference numerals designate corresponding similar parts.
Fig. 1 schematically illustrates a partially cut-away perspective view of an actuator according to an embodiment of the invention.
Fig. 2 schematically illustrates a cross-sectional view of the actuator in Fig. 1 along the cross-section line A-A according to another embodiment of the invention.
Fig. 3 schematically illustrates a cross-sectional view of the actuator in Fig. 1 along the cross-section line B-B according to yet another embodiment of the invention.
Fig. 4 schematically illustrates simplified views of an actuator according to embodiments of the invention in different contraction states of the actuator.
Fig. 5 schematically illustrates a flow diagram of a method for manufacturing a thermally activated actuator according to yet another embodiment of the invention.

In the figures, like reference numerals denote like or functionally like components, unless indicated otherwise. Any directional terminology like "top", "bottom", "left", "right", "above", "below", "horizontal", "vertical", "back", "front", and similar terms are merely used for explanatory purposes and are not intended to delimit the embodiments to the specific arrangements as shown in the drawings.

### DETAILED DESCRIPTION OF THE INVENTION

Although specific embodiments have been illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

Actuators within the meaning of the present invention may comprise any form of structural component that allows for reversible mechanical expansion, rotation and/or contraction when exposed to an external stimulus such as pressure change, temperature change, change in applied electric potential, change in ambient pH value or change in ambient ion concentration. In particular, thermally activated actuators within the meaning of the present invention may involve any actuators having a material with reversible thermotropic behaviour in its operating temperature range as mechanically active material. Thermally activated actuators may particularly comprise encapsulated rolled sheet actuators with a thermal interface fluid as heat transfer medium.

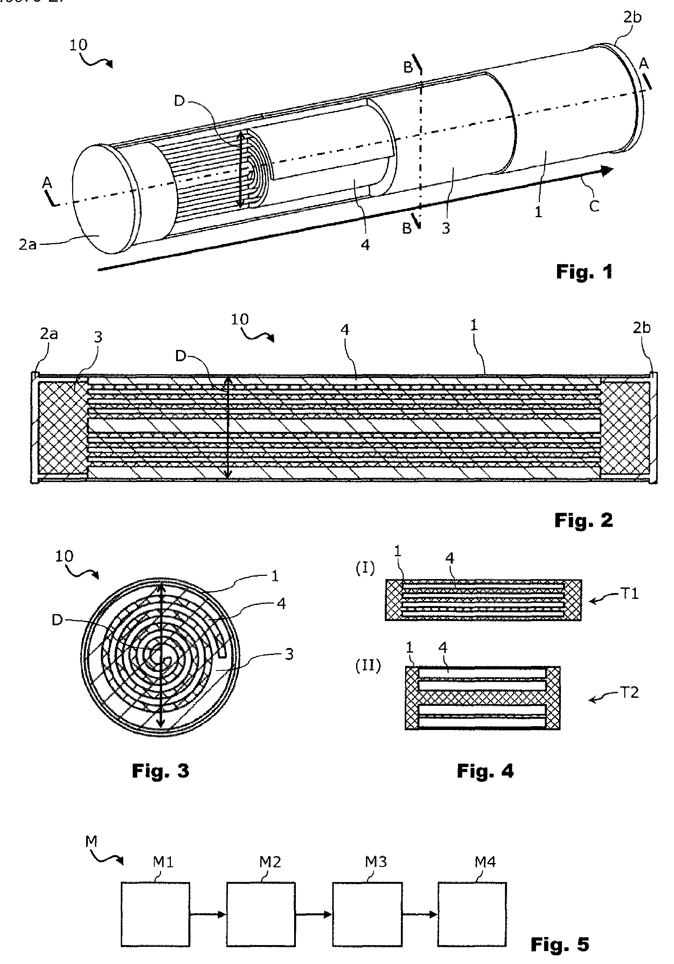

Fig. 1 illustrates a partially cut-away perspective view of an actuator 10. The actuator 10 of Fig. 1 will be explained in conjunction with the cross-sectional views in Fig. 2 and Fig. 3 which show cross-sections through the actuator 10 along the indicated lines A-A and B-B, respectively. In order to understand the principle of actuation of the actuator 10, reference will be made to Fig. 4 in which the partial illustration (1) depicts the actuator 10 in its static, i.e. linearly expanded state, and illustration (II) depicts the actuator 10 in its activated, i.e. linearly contracted state. The actuation direction is indicated with the arrow C in Fig. 1.

The actuator 10 is in particular a thermally activated actuator, i.e. the active material within the actuator 10 may be reversibly contracted and expanded upon heating and cooling, respectively. The actuator 10 generally comprises an actuator housing 1 which may be tubular or cylindrical in shape. The overall length of the actuator housing 1 may be between about a centimetre and several tens of centimetres, while the diameter of the actuator housing 1 may be between several millimetres and several centimetres. The dimensions of the actuator housing 1 will ultimately depend on the type and shape of actuator sheet material 4 encapsulated therein.

The actuator housing 1 may for example be formed as an elastic film and may for example comprise a material selected from silicone, rubber, polyurethane, polyamide and polyethylene. The actuator housing 1 may generally be formed as an open-ended sleeve or pipe, at the open ends of which two end caps 2a, 2b may be attached. Those end caps 2a, 2b may be shaped according to the opening geometry of the sleeve or pipe of the actuator housing 1 and may be form-fit to the housing 1. For example, the end caps 2a, 2b may be formed with a tubular and rigid or semi-rigid terminal tube portion over which the ends of the actuator housing 1 may be tightly fit. If the actuator housing 1 is made from an elastic film, the elastic film may at its open end stretched taut over the rigid or semi-rigid terminal tube portion of the end caps 2a, 2b in each case.

The end caps 2a, 2b may be formed from an electrically conductive material on one hand and may provide mechanical stabilization to the actuator 10. The end caps 2a, 2b are designed to fluidly seal any of the internal components of the actuator 10 within the housing 1. Additionally, the end caps 2a, 2b may provide for anchor points that mechanically transfer contraction and expansion forces of the actuator 10 to the outside.

Within the actuator housing 1 a strip of actuator sheet material 4 is encapsulated. The strip of actuator sheet material 4 is rolled up to a coil, for example in the cross-sectional shape of an Archimedean spiral as shown in Fig. 3. Of course, other outer shapes are possible for the rolled-up coil as well, such as the involute of a circle, a reciprocal spiral, a lituus or other spiral types. The coil may be wound up with a spacing between consecutive windings such that a fluid 3 embedded within actuator housing 1 may flow in between the windings and wet every point of the strip surface of the actuator sheet material 4. In some cases, it may be possible to tautly stretch the actuator housing 1 over the first outer surface of the wound coil of actuator sheet material 4 such that there may not be any spacing between the outer layer of the coil of actuator sheet material 4 and the inner housing wall of the actuator housing 1 (as exemplarily depicted in Fig. 2). In such cases, the fluid 3 may only freely flow in between the windings, but not necessarily between the outer layer of the coil of actuator sheet material 4 and the inner housing wall of the actuator housing 1.

The fluid 3 is a thermal interface fluid 3, i.e. a fluid having a high thermal conductivity and a relatively low heat capacity. Due to the thermal interface fluid 3 flowing in between windings of the coil structure of the rolled up actuator sheet material 4, the actuator sheet material 4 may be homogeneously heated by transferring heat from the thermal interface fluid 3 to the surface of the actuator sheet material 4. In order to transfer heat to the rolled up actuator sheet material 4, excitation energy may be introduced into the thermal interface fluid 3, for example by heating the whole actuator 10 or by forcing an electric current through the actuator housing 1 and thus the thermal interface fluid 3. To that end, it may in some cases be possible to apply an electric potential difference to the end caps 2a, 2b as electrodes so that an electric current flows though the thermal interface fluid 3 and the fluid heats up resistively.

Similarly, upon removing the introduction of excitation energy, the actuator sheet material 4 will cool down and the heat will be dissipated to the thermal interface fluid 3 and from there through the actuator housing walls to the surrounding. The thermal interface fluid 3 and the actuator sheet material 4 are fluidly sealed within the actuator housing 1 and form a closed system.

The actuator sheet material 4 may in particular comprise a liquid crystalline elastomer, such as silicone or carbon backbone polymer chain which may be cross-linked with crosslinking molecules. The thermal interface fluid 3 may for example comprises an electrolytic solution such as a potassium chloride solution, an organic fluid or a thermally conductive gel. The thermal interface fluid 3 may be selected such that it has an electric conductivity value above a predetermined conductivity threshold in order to ensure proper heat generation through its Ohmic resistance. The thermal interface fluid 3 may be heated up with low voltage values of only a few Volts.

As illustrated in Fig. 4, in its quiescent or static state at a lower temperature T1, the coil of actuator sheet material formed from LCE is stretched in an elongated state. The preferred expanded direction generally correlates with the direction of the coil axis. This is due to the mesogens being aligned in an anisotropic crystalline phase. When heat is transferred to the rolled-up actuator sheet material 4 up to a higher temperature T2>T1, the crystalline phase is dissolved upon passing the material-specific phase change temperature. The mesogens take on an amorphic state in which the whole coil of actuator sheet material 4 contracts in the direction C. Concomitantly, the coil will radially expand due to the law of conserved volume of material. For example, if a contraction of about 30% of the overall length of the coil in axial direction is assumed, the radial expansion will correspond to about 20% of the coil diameter D as indicated in the drawings. By rolling up the actuator sheet material 4 to a coil, both the contraction in axial direction as well as the expansion in radial direction is only slightly hampered by the structure of the actuator 10. Additionally, even upon expansion of the actuator sheet material 4, neighbouring windings of the coil will still be spaced apart from each other, at least by a margin that allows some of the thermal interface fluid 3 to pass between the windings and transfer heat.

Fig. 5 shows a schematic illustration of a flow diagram of a method M for manufacturing a thermally activated actuator. For example, the method M may be used to produce an actuator 10 such as the one illustrated in and explained in conjunction with Figs. 1 to 4.

The method M comprises at M1 the step of rolling up a strip of actuator sheet material 4 to a coil. The shape of the coil may be that of an Archimedean spiral, i.e. a coil with equidistant spacing between neighbouring coil windings. In particular, the coil may be rolled up with the spacing between neighbouring coil windings having approximately the same width as the thickness of the actuator sheet material 4. The thickness of the actuator sheet material 4 may for example be in the range of one tenth to several tenths of a millimetre. The actuator sheet material 4 may for example comprise a liquid crystalline elastomer (LCE) such as silicone or carbon backbone polymer chain cross-linked with mesogens or mesogenic groups.

In order to define a preferred expansion/contraction direction, the rolled up actuator sheet material 4 may be polymerized in a stretched state to create an expansion bias in a preferred contraction direction C. By crosslinking the backbone chains using crosslinking molecules and by further introducing rod-like molecules into the crosslinked backbone chain a mesophase structure may be implemented that causes the polymer chains themselves to adopt a conformation compatible with the structure of the mesophase. Those rod-like molecules are thus often referred to as "mesogens" or "mesogenic groups". The mesogens are a compound which exhibit properties of liquid crystals, i.e. the mesogens inherently induce anisotropy in the LCE which may be resolved to amorphic behaviour upon thermally activating the mesogenic compound. While the silicon or carbon elastomeric backbones dominate the macroscopic behaviour of the LCE, the mesogenic groups convey thermotropism to the LCE. The elastomeric backbone material soaked with the desired mesogen concentration may be carefully mechanically stretched before polymerisation. This causes the mesogens to increase their level of anisotropy, i.e. the rod-like molecules are mainly oriented in the direction of stretching stress. Upon polymerisation, the whole LCE is biased in a preferred direction. Mesogenic groups may be bound to the backbone in different ways, for example as part of the elastomeric chain (so-called "main chain LCEs") or as pendants attached by spacers to the chains (so-called "side chain LCEs").

In either case, if the LCE is brought above a certain phase change temperature which may depend on both the choice of material and concentration of backbone and mesogens, the mesogens change from the liquid crystalline state to an isotropic liquid state in which the orientational entropy of the mesogens is maximized again. This causes the LCE to macroscopically contract in the inherently defined preferred direction. The whole process is thermally reversible, i.e. upon lowering the temperature of the LCE to below the phase change temperature (taking into account hysteretic effects) the mesogens again form the liquid crystalline state causing the LCE material to expand back to the biased macroscopic state.

In a second step M2, the rolled up actuator sheet material 4 is encapsulated in an actuator housing 1. In conjunction with a third step M3, in which the actuator housing 1 including the encapsulated actuator sheet material 4 is filled with a thermal interface fluid 3, an actuator 10 may be formed. Optionally, the ends of the actuator housing 1 may be capped off in a fourth step M4 with electrically conductive end caps 2a, 2b. The thermal interface fluid 3 may include an electrolytic solution such as a solution of potassium chloride (KCI), an organic fluid or a thermally conductive gel. The thermal interface fluid 3 may be made electrically conductive by compounding the fluid or gel component with electrically conductive particles such as carbon black particles, graphene flakes, carbon nanotubes or any other suitable metallic particles. The Ohmic resistance of the compounded fluid may be selected such that the necessary thermal excitation energy for the actuator sheet material may be introduced in the fluid by means of an electric potential applied to the end caps 2a, 2b as electrodes. The necessary thermal excitation energy may in particular be determined by the temperature difference between the static state of the actuator sheet material 4 and the activated state of the actuator sheet material 4, i.e. the temperature difference needed to cause the liquid crystal component in the LCE material of the actuator sheet material 4 to undergo a phase change from the anisotropic state to the amorphic state.

The end caps 2a, 2b may - after capping off the housing - be sealed with an elastomeric resin. The material for the end caps 2a, 2b and/or the actuator housing 1 may be selected to ensure proper heat dissipation over the outer surface of the actuator when releasing the activated state. This guarantees that the actuator 10 returns back to the static state quickly and therefore expands to the stretched state again in a reasonable hysteresis time. The actuator housing 1 may for example be formed with an outer shape of a tubular cylinder, in particular from silicone, rubber, polyurethane, polyamide and polyethylene. Alternatively or additionally, it may also be possible to embed carbon nanotubes or metallic particles into the material of the actuator housing 1 to provide for good thermal conductivity to dissipate excess heat to the outside of the actuator housing 1.

In the foregoing detailed description, various features are grouped together in one or more examples or examples with the purpose of streamlining the disclosure. It is to be understood that the above description is intended to be illustrative, and not restrictive. It is intended to cover all alternatives, modifications and equivalents. Many other examples will be apparent to one skilled in the art upon reviewing the above specification. In particular, the embodiments and configurations described for the actuator can be applied accordingly to the method according to the invention, and vice versa.

The embodiments were chosen and described in order to best explain the principles of the invention and its practical applications, to thereby enable others skilled in the art to best utilize the invention and various embodiments with various modifications as are suited to the particular use contemplated. In the appended claims and throughout the specification, the terms "including" and "in which" are used as the plain-English equivalents of the respective terms "comprising" and "wherein," respectively. Furthermore, "a" or "one" does not exclude a plurality in the present case.

### List of reference signs

- 1: Actuator housing
- 2a: End cap
- 2b: End cap
- 3: Thermal interface fluid
- 4: Rolled up actuator sheet material
- 10: Actuator
- A-A: Longitudinal cross-section
- B-B: Transversal cross-section
- C: Contraction direction
- D: Roll diameter
- M: Method
- M1: Method step
- M2: Method step
- M3: Method step
- M4: Method step
- M5: Method step
- T1: Static state temperature
- T2: Activation state temperature

## Claims

1. Thermally activated actuator (10), comprising:
an actuator housing (1);
a thermal interface fluid (3) contained in the actuator housing (1); and
a strip of actuator sheet material (4) rolled up to a coil which is embedded in the thermal interface fluid (3) within the actuator housing (1).

2. Actuator (10) according to claim 1, wherein the actuator sheet material (4) comprises a liquid crystalline elastomer.

3. Actuator (10) according to claim 2, wherein the liquid crystalline elastomer comprises silicone or carbon backbone polymer chain cross-linked with mesogens or mesogenic groups.

4. Actuator (10) according to one of the claims 1 to 3, wherein the thermal interface fluid (3) comprises one of an electrolytic solution, an organic fluid and a thermally conductive gel.

5. Actuator (10) according to claim 4, wherein the thermal interface fluid (3) has an electric conductivity value above a predetermined conductivity threshold.

6. Actuator (10) according to claim 5, further comprising:
two electrically conductive end caps (2a, 2b) attached to opposite ends of the actuator housing (1) and encapsulating the thermal interface fluid (3) and the actuator sheet material (4) within the actuator housing (1).

7. Actuator (10) according to one of the claims 1 to 6, wherein the actuator housing (1) has an outer shape of a tubular cylinder.

8. Actuator (10) according to claim 7, wherein the actuator housing (1) comprises one or more of silicone, rubber, polyurethane, polyamide and polyethylene.

9. Actuator (10) according to claim 8, wherein the actuator housing (1) comprises an elastic film.

10. Method (M) for manufacturing a thermally activated actuator (10), the method (M) comprising:
rolling up (M1) a strip of actuator sheet material (4) to a coil;
encapsulating (M2) the rolled up actuator sheet material (4) in an actuator housing (1); and
filling (M3) the actuator housing (1) including the encapsulated actuator sheet material (4) with a thermal interface fluid (3).

11. Method (M) according to claim 10, the method (M) further comprising:
capping off (M4) the ends of the actuator housing (1) with electrically conductive end caps (2a, 2b).

12. Method (M) according to one of the claims 10 and 11, wherein the actuator sheet material (4) comprises a liquid crystalline elastomer.

13. Method (M) according to claim 12, wherein the liquid crystalline elastomer comprises silicone or carbon backbone polymer chain cross-linked with mesogens or mesogenic groups.

14. Method (M) according to 13, wherein the rolled up actuator sheet material (4) is polymerized in a stretched state to create an expansion bias in a preferred contraction direction (C).

15. Method (M) according to one of the claims 10 to 14, wherein the thermal interface fluid (3) comprises one of an electrolytic solution, an organic fluid and a thermally conductive gel.
